# EUROPÄISCHE PATENTANMELDUNG

(11) **EP 0 634 879 A2**
(43) Veröffentlichungstag der Anmeldung: **18.01.1995**
(21) Anmeldenummer: 94110591.8
(22) Anmeldetag: 07.07.1994
(51) Int. Cl.: H04Q 11/04, H04L 12/56

(54) **Anordnung und Verfahren zum Bearbeiten von Datenstrukturen bei deren Durchlauf durch einen Netzwerkknoten**

(30) Priorität: 14.07.1993 DE 4323471
(71) Anmelder: ATecoM GmbH, D-52134 Herzogenrath (DE); ASCOM TECH AG, CH-3018 Bern (CH)
(72) Erfinder: van Loo, Gerrit-Jan Jr ., NL-Heerlen (NL); Noll, Joachim, D-52074 Aachen (DE); Schwope, Andreas, D-52146 Würselen (DE)
(74) Vertreter: Zenz, Joachim Klaus, Dipl.-Ing.

(57) **Zusammenfassung**

In einem Knoten eines Kommunikationsnetzwerks können alle Informationsabschnitte der bearbeiteten Datenstruktur, einschließlich Vor-, Nach- und Parallelspann, Kopf- und Informationsfeld mit Hilfe einer der Leseeinrichtung (11) zugeordneten Lesemaske (12) selektiv gelesen werden. Eine Kombination aus einer Schreibeinrichtung (14) und einer Schreibmaske (15) dient zum selektiven Beschreiben der Datenstruktur in allen Informationsabschnitten. Die Länge des Vorspanns oder Nachspanns kann zur Erhöhung der Kapazität der Informationsaufnahme der Datenstruktur vergrößert werden. Im Leitungsweg zwischen einer Eingangsschnittstelle (10) und der Schreibeinrichtung (14) ist eine einstellbare Verzögerungseinrichtung (13) angeordnet, in die die Datenstruktur ungeteilt eingelesen werden kann. Ein Mikroprozessor (25) ist mit allen Verarbeitungseinheiten (10..17, 22..24) der Anordnung gekoppelt und dient der Voreinstellung der beiden Masken zur Selektion der zu lesenden und schreibenden Informationen.

## Beschreibung

Die Erfindung betrifft eine Anordnung und ein Verfahren zum Bearbeiten einer eine ATM-Zelle enthaltenden binären Datenstruktur bei deren Durchlauf durch einen Knoten eines Kommunikationsnetzwerks, mit einer Eingangsschnittstelle, einer Leseeinrichtung zum Lesen mindestens eines Zellenabschnitts, einer Schreibeinrichtung zum Beschreiben wenigstens eines Zellenabschnitts und einer Ausgangsschnittstelle.

Eine ATM (asynchroner Transfermodus)-Schicht dient dem Transport kurzer Informationspakete, genannt ATM-Zellen, von einer Sendestation zu ihrer Zielstation. Bekannte ATM-Zellen sind Pakete fester Längen und weisen einen Kopfteil (Header) und ein nachfolgendes Informationsfeld auf (Jean-Yves Le Boudec in dem Artikel "The Asynchronous Transfer Mode: a tutorial" in Computer Networks and ISDN Systems 24 (1992), SS 279-309). Die Gesamtlänge der Zellen beträgt jeweils 53 Bytes, wobei der Kopfteil (Header) 5 Bytes und ein Informationsfeld 48 Bytes enthalten. Die im Kopfteil enthaltene Zellen-Routeninformation ist wegen der festen und geringen Zellengröße ein Etikett und keine explizite Adresse. Wenn eine Vermittlungseinheit (im folgenden Knoten genannt) eine einlaufende Zelle mit dem Routenetikett m an einem Eingangsport liest, bestimmt sie aus einer Routenvermittlungstabelle einen Ausgangsport j und ein Etikett n. Die Zelle wird danach auf den Ausgangsport j geschrieben und erhält das neue Etikett n. Aus dem neuen Etikett n entnimmt die nächste Vermittlungseinheit entsprechende Informationen usw.. Die Routenvermittlungstabellen müssen im voraus eingestellt oder dynamisch zugeordnet werden. Der Transport aller Zellen findet über eine Verbindung statt.

Es gibt auch bereits sog. Translatoren (Übersetzer), die in der ATM-Schicht die reine Kopfübersetzung durchführen und zusätzlich in der Lage sind, eine Routeninformation zum Vermitteln der einzelnen Informationspakete an die ATM-Zelle anzuhängen.

In den bekannten ATM-Systemen gibt es im Prinzip keine feste Definition einer Datenrate, sondern nur die Vorgabe einer maximalen Datenrate auf einer Verbindungsleitung. Die Datenrate einer bestimmten Verbindung auf einer solchen Leitung wird definiert als Anzahl von Zellen pro Zeiteinheit. Es gibt keine Rahmenstruktur auf einer solchen Leitung, so daß eine Zuordnung von Zellen zu einer Verbindung über ein festes Zeitraster nicht möglich ist. Die Kopfdaten müssen daher von Zelle zu Zelle neu verarbeitet werden, und es ist nicht vorhersehbar, wann die nächste Zelle für eine existierende Verbindung ankommt.

Der Erfindung liegt die Aufgabe zugrunde, die Applikationsmöglichkeiten eines ATM-Systems wesentlich zu erweitern. Insbesondere soll die Möglichkeit geschaffen werden, beim Transport von Informationspaketen durch eine ATM-Schicht Daten extrahieren und einfügen zu können.

Gelöst wird diese Aufgabe erfindungsgemäß dadurch, daß der Leseeinrichtung eine erste Maskeneinrichtung zum selektiven Lesen aller Informationsabschnitte der bearbeiteten Datenstruktur, einschließlich Vor- und/oder Nach- und/oder Parallelspann und Informationsfeld der ATM-Zelle zugeordnet ist und daß der Schreibeinrichtung eine zweite Maskeneinrichtung zum selektiven Beschreiben der ATM-Zelle in ihrem Informations-feld und Kopffeld und/oder in wenigstens einem der Vor-, Nach- oder Parallelspanne der binären Datenstruktur zugeordnet ist.

Das erfindungsgemäße Verfahren zum Bearbeiten einer eine ATM-Zelle enthaltenden binären Datenstruktur bei deren Durchlauf durch einen Knoten eines Kommunikationsnetzwerks zeichnet sich dadurch aus,
a) daß eine Datenstruktur mit mindestens einem zusätzlichen Informationsabschnitt als Vorspann und/oder Nachspann und/oder Parallelspann verwendet wird, wobei der Vor- und/oder Nach- und/oder Parallelspann selektiv einstellbar (programmierbar) ist/sind;
b) daß das Informations- und/oder Kopffeld der ATM-Zelle und/oder wenigstens einer der Vor-, Nach- oder Parallelspanne über eine erste Maskeneinrichtung selektiv gelesen wird; und
c) daß in Abhängigkeit von der Leseoperation gemäß Verfahrensschritt b) wenigstens einer der aus Informationsfeld, Zellenkopf, Vorspann, Nachspann und Parallelspann bestehenden Informationsabschnitte über eine zweite Maskeneinrichtung selektiv beschrieben und/oder entfernt wird.

Die Vermittlungsknoten sind bei der Erfindung so ausgebildet, daß beliebige Daten über die erste Maskeneinrichtung selektiv bit-, byte- oder auch abschnittsweise gelesen werden können. Mit den extrahierten Daten können interne oder externe Tabellen adressiert werden. Über die zweite Maskeneinrichtung kann die Datenstruktur - wiederum selektiv - an beliebiger Stelle beschrieben, ergänzt oder gelöscht werden. Dadurch erhält jeder Knoten auch bei Einbindung in ein herkömmliches ATM-Layer-Netzwerk eine selbständige Eingriffsmöglichkeit auf Inhalt, Format und Routenführung. Im Durchlauf (on the fly) können beliebige Bits und Bytes extrahiert und/oder eingefügt und/oder überschrieben werden. Als Quellen für einzufügende Daten können nicht nur externe Tabellen, sondern auch interne oder externe Komponenten, externe Algorithmen, die beispielsweise in einer Form integrierter Schaltkreise implementiert sind, oder auch interne Tabellen und Speicher dienen. Andererseits ist die erfindungsgemäß ausgebildete Bearbeitungsanordnung problemlos in der Lage, ATM-Zellen in herkömmlicher Weise zu vermitteln, d.h. nur das Kopffeld zu lesen und zu übersetzen, während alle Daten im Informationsfeld unberührt bleiben.

Eine bevorzugte Weiterbildung der Erfindung besteht darin, daß die zweite Maskeneinrichtung und die zugehörige Schreibeinrichtung mit Mitteln zur Änderung der Länge eines Vorspanns und/oder eines Nachspanns versehen sind. Hierzu gehört auch, daß Vorspann und/oder Nachspann an eine ATM-Zelle angehängt werden können. Entsprechendes gilt auch für einen Parallelspann, dessen Länge vorzugsweise derjenigen der ATM-Zelle mit Vor- und/oder Nachspann entspricht.

Um ein "on the fly"-Einfügen von Daten in die Datenstruktur zu ermöglichen, sieht die Erfindung in Weiterbildung vor, daß im Leitungsweg zwischen der Eingangsschnittstelle und der Schreibeinrichtung eine Verzögerungseinrichtung angeordnet ist, in die die Datenstruktur ungeteilt einlesbar ist. Vorzugsweise ist die Verzögerungseinrichtung mit Mitteln zur Einstellung der Verzögerungszeit versehen. Auf diese Weise ist es möglich, die ungeteilte Datenstruktur erst dann in die Schreibeinrichtung einzugeben, wenn die einzufügenden und/oder anzuhängenden Daten internen und/oder externen Quellen entnommen sind und zum Beschreiben der durchlaufenden Datenstruktur zur Verfügung stehen.

Jedem mit der erfindungsgemäßen Anordnung versehenen Knoten ist vorzugsweise ein Mikroprozessor zugeordnet, der mit allen Bearbeitungseinheiten der Anordnung gekoppelt und so ausgebildet ist, daß er vor Beginn der Bearbeitung des Zellenstroms die Ein- und Ausgabeschnittstellen auswählt, die Lese- und Schreibeinrichtungen zurücksetzt, die ersten und zweiten Maskeneinrichtungen zur Selektion der zu lesenden und schreibenden Informationen einstellt und ggf. die Verzögerungszeit der Verzögerungseinrichtung vorgibt.

Eine weitere Steigerung der Applikationsmöglichkeiten ergibt sich in Weiterbildung der Erfindung dadurch, daß zwischen Schreibeinrichtung und Ausgangsschnittstelle Mittel zur Taktentkopplung eingebunden sind.

Weitere vorteilhafte Ausgestaltungen der Erfindung sind in den Unteransprüchen gekennzeichnet.

Im folgenden wird die Erfindung unter Bezugnahme auf die Zeichnung anhand von Beispielen näher erläutert. In der Zeichnung zeigen:
- Fig. 1: schematische Darstellungen verschiedener binärer Datenstrukturen einschließlich einer herkömmlichen ATM-Zelle, sowie demgegenüber geänderter Datenstrukturen zur Erläuterung der durch die Erfindung gebotenen Bearbeitungsmöglichkeiten; und
- Fig. 2: eine spezielle Datenstruktur und erfindungsgemäße Bearbeitungen dieser Datenstruktur; und
- Fig. 3: ein Blockschaltbild eines Ausführungsbeispiels der erfindungsgemäßen Bearbeitungsanordnung.

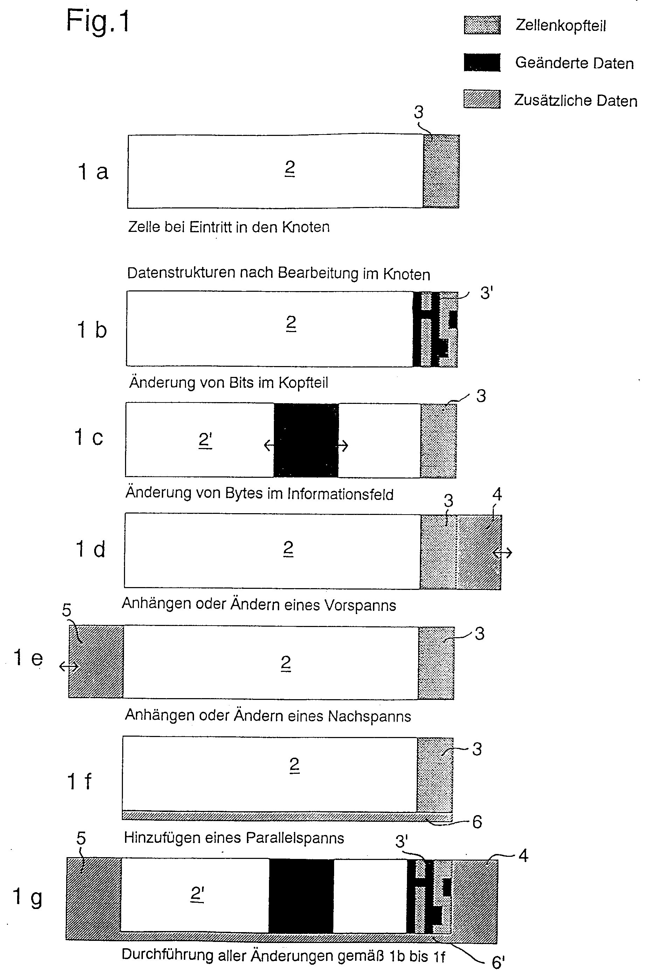

Fig. 1 zeigt eine schematische Darstellungen einer herkömmlichen ATM-Zelle 1a bei deren Eintritt in einen Vermittlungsknoten eines Netzwerks und in den Teildarstellungen 1b bis 1g modifizierte Datenstrukturen, die aus der ATM-Zelle gemäß Fig. 1 nach der erfindungsgemäßen Bearbeitung im Knoten entstanden sind.

Die ATM-Zelle 1a gemäß Fig. 1 ist ein Datenpaket mit einer Breite von 8 Bit, einem Informationsfeld 2 von 48 Bytes und einem Kopfteil 3 mit einer Länge von 5 Bytes. Diese herkömmliche ATM-Zelle kann natürlich auch in dem erfindungsgemäßen Knoten in herkömmlicher Weise dadurch bearbeitet werden, daß der Kopfteil 3 am Eingangsport gelesen und aus einer Routenvermittlungstabelle ein Ausgangsport bestimmt und im Kopfteil ein neues Etikett geschrieben wird. Eine Änderung des Informationsfeldes 2 findet dabei nicht statt.

Mit 1b ist eine in der weiter unten beschriebenen erfindungsgemäßen Anordnung bearbeitete Datenstruktur bezeichnet, bei der im Kopfteil 3' Bits und Bytes geändert worden sind. Wie zu sehen ist, ist die Länge (ebenso wie die Breite) der Zelle 1b unverändert.

In der Datenstruktur 1c sind die mit 20 gekennzeichneten Bytes im Informationsfeld 2' geändert. Die nach beiden Seiten gerichteten Pfeile sollen erkennbar machen, daß die Änderung der Bytes im Informationsfeld 2' erweitert oder auch verringert oder auch entsprechend einer geeigneten Maske über das Feld 2' diskontinuierlich verteilt sein kann.

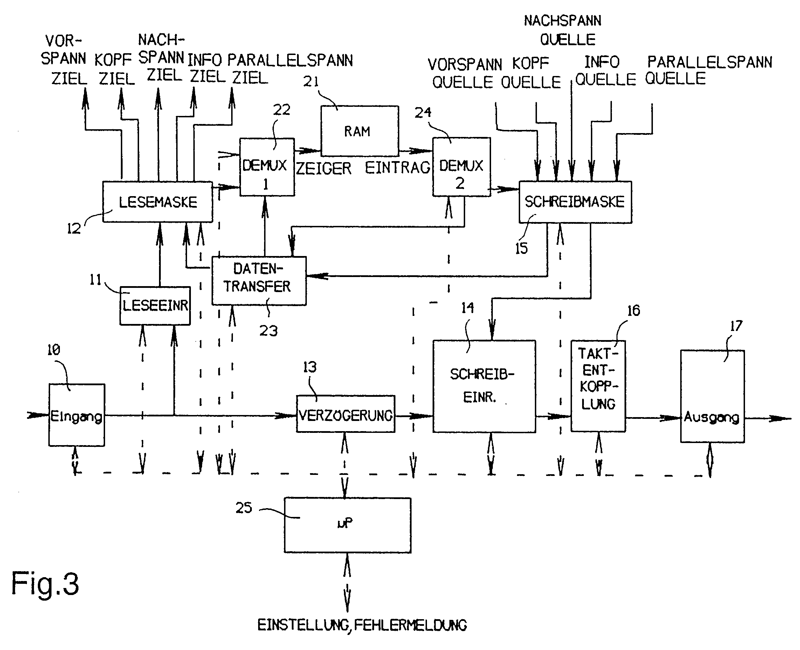

In der Datenstruktur 1d ist dem Kopfteil 3 ein Vorspann vorangestellt, dessen Länge mit Hilfe einer Schreibmaske selektiv einstellbar ist. Dies wird anhand von Fig. 3 noch genauer erläutert werden. In der Datenstruktur 1e ist ein ebenfalls selektiv einstellbarer Nachspann 5 angehängt; im übrigen bleibt die ATM-Zelle mit Informationsfeld 2 und Kopfteil 3 unverändert.

Bei der Datenstruktur 1f ist der eingangsseitigen Datenstruktur 1a ein Parallelspann 6 einer Breite von 2 Bits zugeordnet, der sich über die volle Zellenlänge erstreckt.

In der Datenstruktur 1g sind schließlich alle Bearbeitungsmöglichkeiten zusammengefaßt, wie sie zuvor an den Datenstrukturen 1b bis 1f erläutert worden sind.

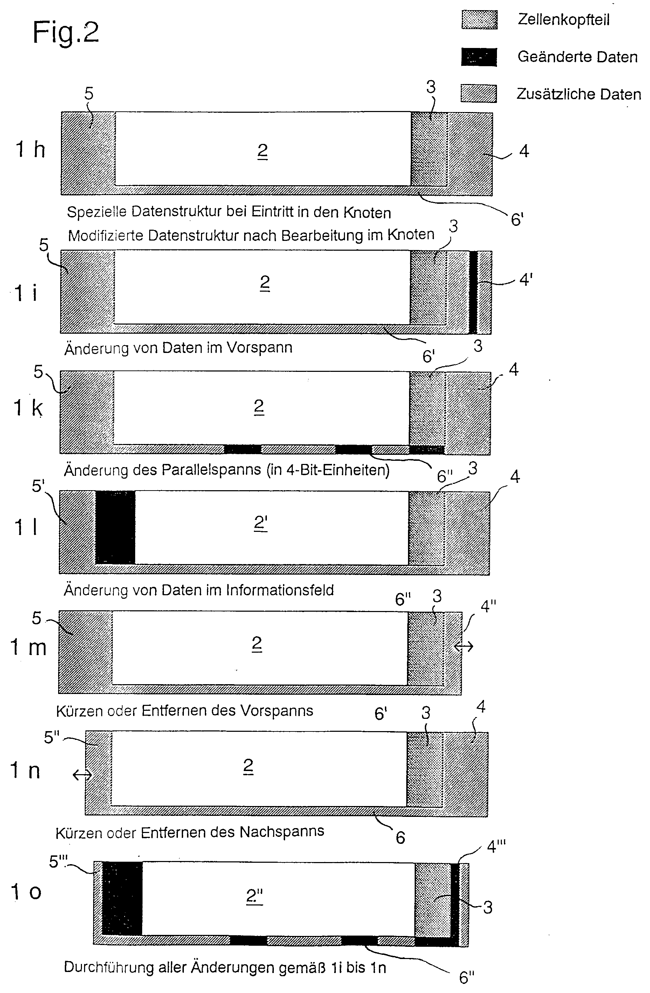

Fig. 2 zeigt eine spezielle Datenstruktur 1h bei deren Eintritt in den Vermittlungsknoten sowie Datenstrukturen 1i bis 1o, die nach jeweils unterschiedlichen Bearbeitungen mit einer erfindungsgemäßen Anordnung am Ausgang des Knotens angeboten werden.

Die spezielle Datenstruktur 1h hat als Kern die ATM-Zelle (1a) mit dem Informationsfeld 2 und dem Kopfteil 3. Zusätzlich sind Vor-, Nach- und Parallelspanne 4, 5 und 6' vorgesehen.

Die Datenstruktur 1i hat einen geänderten Vorspann 4'; die Daten in allen anderen Abschnitten der Datenstruktur 1i entsprechen denjenigen der Datenstruktur 1h.

In der Datenstruktur 1k sind verschiedene 4-Bit-Einheiten im Parallelspann 6'' geändert. Diese sind in dem dargestellten Ausführungsbeispiel schwarz gekennzeichnet.

In der Datenstruktur 1l sind die Daten des Informationsfeldes durch die erfindungsgemäße Anordnung geändert, wobei das Informationsfeld 2' zu Lasten des Nachspanns 5' verlängert wurde.

In den Datenstrukturen 1m und 1n wurde jeweils der Vorspann 4'' bzw. der Nachspann 5'' unter Änderung des Formats der Gesamtzelle gekürzt.

Die Datenstruktur 1g hat gegenüber der eintrittsseitigen Datenstruktur 1h verschiedene Änderungen gleichzeitig erfahren. Die geänderten Daten sind auch hier schwarz angelegt.

Implementierungen und Anwendungsmöglichkeiten der verschiedenen Datenstrukturen werden nachfolgend in Verbindung mit Fig. 3 beschrieben.

Das in Fig. 3 schematisch dargestellte Ausführungsbeispiel der erfindungsgemäßen Bearbeitungsanordnung weist die folgenden Komponenten auf: Eine Eingangseinheit 10 mit mehreren Schnittstellentypen A, B, C und D, eine Leseeinrichtung 11 mit einer dieser zugeordneten Lesemaskeneinrichtung 12, eine im Leitungsweg des Zellenstroms der Eingangseinheit 10 nachgeschaltete Verzögerungseinrichtung 13, eine letzterer nachgeschaltete Schreibeinrichtung 14 mit zugeordneter Schreibmaskeneinrichtung 15, eine im Ausgangspfad der bearbeiteten Datenstrukturen angeordnete Taktentkopplungseinrichtung 16 und eine Ausgangseinheit 17 mit Schnittstellentypen A, B, C und D.

Der Knoten gemäß Fig. 3 weist ferner einen internen RAM 21 auf, der einerseits über einen ersten Demultiplexer 22 mit der Lesemaskeneinrichtung 12 und einer Datentransfereinrichtung 23 und andererseits über einen zweiten Demultiplexer 24 mit der Schreibmaskeneinrichtung 15 und der Datentransfereinrichtung 23 gekoppelt ist.

Ein Mikroprozessor 25 ist mit allen Bearbeitungseinheiten, d.h. mit den Einheiten 10..17 und 22..24 gekoppelt. Seine Hauptfunktion besteht darin, vor Beginn der Bearbeitung die Ein- und Ausgangsschnittstellen in den Ein- und Ausgängen 10 und 17 auszuwählen, die Lese- und Schreibeinrichtungen 11 und 14 zurückzusetzen, die Lese- und Schreibmasken 12 und 15 zur Selektion der zu lesenden und schreibenden Informationen einzustellen und ggf. auch auf die Verzögerungseinrichtung 13 zur Einstellung der Verzögerungszeit einzuwirken. Weitere Funktionen des Mikroprozessors 25 und zugeordneter Komponenten werden weiter unten beschrieben.

Die Lesemaske 12 ist in dem dargestellten Ausführungsbeispiel mit verschiedenen Zielkomponenten, nämlich einem Vorspannziel, einem Kopfziel, einem Nachspannziel, einem Informationsfeldziel und einem Parallelspannziel, gekoppelt. Die zweite bzw. Schreibmaskeneinrichtung 15 ist entsprechend mit einer Vorspannquelle, einer Kopfteilquelle, einer Nachspannquelle, einer Informationsfeldquelle und einer Parallelspannquelle gekoppelt, die als externe Einheiten die Schreibeinrichtung 14 nach Selektion über die Schreibmaske 15 mit den zu schreibenden oder einzufügenden Daten versorgen.

Die in Figur 3 schematisch dargestellte Anordnung bietet eine praktisch universelle Bearbeitungsmöglichkeit für einen ATM-Zellenstrom.

Mit Hilfe der Kombination aus Leseeinrichtung 11 und Lesemaske 12 können Daten aus einem oder mehreren beliebigen Datenabschnitten 2, 3, 4, 5 und 6 selektiv gelesen werden. Die gelesenen oder aus dem Datenstrom extrahierten Daten können von 8 Bits bis zu einer vollständigen Zelle variieren. Die gelesenen Daten können bei Bedarf zur Auswahl oder zur Erzeugung von Daten verwendet werden, die mit Hilfe der Kombination aus Schreibmaske 15 und Schreibeinrichtung 14 in die Datenstruktur geschrieben werden.

Die Anordnung gemäß Figur 3 ist in der Lage, mit Hilfe der Schreibmaske und der Schreibeinrichtung 15 und 14 Daten in alle Abschnitte 2...6 jeder Datenstruktur selektiv zu schreiben oder auch Daten bei Bedarf zu entfernen. Bezüglich der Länge der einzufügenden Daten gibt es keinerlei Beschränkungen: ein Einzelbit, eine beliebige Bitfolge und sogar eine vollständige Zelle können eingefügt werden. Die zu schreibenden Daten können aus einem internen Speicher 21 oder aus externen Quellen bezogen werden, und/oder sie können aus zuvor gelesenen Daten wieder eingefügt werden. Die Daten der Zelle können aber auch bis auf diejenigen des Kopfteils den Knoten unverändert durchlaufen.

Am Ausgang 17 können Leerzellen erzeugt werden. Über einen in der Zeichnung nicht dargestellten Eingangspin kann die in Figur 3 dargestellte Anordnung zur Erzeugung einer Leerzelle selbst dann veranlaßt werden, wenn eine gültige Zelle zur Ausgabe ansteht. Der Parallelspann 6, 6' bzw. 6'' in den Datenstrukturen 1f bis 1o dient in erster Linie dem Transport zusätzlicher Daten, die bei belegtem Datenfeld 2 nicht anders übertragen werden können. Zu diesem Zweck können zusätzlich 53 oder 106 Bits (bei einer der ATM-Zellen entsprechenden Länge) im Parallelspann 6 untergebracht werden, und zwar in Abhängigkeit davon, ob der Parallelspann eine Breite von einem oder zwei Bits erhält. Die zusätzlichen Informationen können über die Schreibmaske 15 einer Parallelspann-Datenquelle entnommen werden. Ähnliches gilt natürlich auch für die Daten, die in den Vor- und Nachspann sowie in den Kopfteil 3 und in das Informationsfeld 2 geschrieben werden sollen. Die Schreibmaske gibt die Möglichkeit zur Auswahl der durch die Schreiboperation betroffenen Informationsabschnitte und der Einzelbits bzw. Bytes.

Die Vor- und Nachspanne 4 und 5 können ebenso wie der Parallelspann zum Transport zusätzlicher Daten dienen, wenn das Datenfeld 2 bereits mit Daten vollständig belegt ist. Besonders geeignet sind die Vor- und Nachspanne aber zur Aufnahme von Prüf-, Kontroll- und Routeninformationen. Die im Vorspann oder Nachspann eingefügten Bytes (maximal 15 Bytes bei dem beschriebenen Ausführungsbeispiel) brauchen nicht alle an einem Knoten eingefügt zu werden. Es können vielmehr an im Zellstromweg hintereinander angeordneten Knoten jeweils ein oder mehrere Bytes der einlaufenden Datenstruktur vorangestellt werden.

Die beschriebene Anordnung verfügt in Zuordnung zur Maskeneinrichtung jeweils über ein Startregister und ein Informationsabschnitt-Längenregister. An den durch das Startregister bezeichneten Stellen werden Bytes entsprechend der Einstellung des entsprechenden Längenregisters eingefügt. Die Werte der Start- und Längenregister müssen kleiner oder gleich dem Format des zugehörigne Informationsabschnitts sein, sei es Vorspann, Informationsfeld, Nachspann oder Parallelspann.

Normalerweise sorgt die beschriebene Anordnung für einen Ersatz von Daten aus einer ankommenden Zelle. Wenn der Benutzer eine neue Zelle in den Datenstrom einfügen will, muß zunächst ausreichend Raum im Datenstrom zur Aufnahme der Zelle zur Verfügung gestellt werden. Zu diesem Zweck kann ein geeignetes Anforderungssignal an die in Fig. 3 dargestellte Anordnung angelegt werden. Aufgrund dieses Signals überwacht die Anordnung den Datenstrom. Sobald ein zum Einfügen der neuen Zelle ausreichender Raum zur Verfügung steht, wird von der Anordnung ein "Lücken-"Signal entwickelt. Die Leseeinheit 11 wird entaktiviert, während die Schreibeinrichtung 14 die Zelle in den Datenstrom einfügt. Die Daten-Transfereinrichtung 23 dient zur Aktualisierung von extern angeschlossenen Quellen oder des internen RAM des Knotens. Die Quellen werden beim Durchlauf einer Datenstruktur nach Bedarf und dem Ergebnis der Lesezugriffe über die Leseeinrichtung 11 von der Anordnung gelesen. Außerdem sind Mittel vorgesehen, um die Tabellen mit neuen bzw. gültigen Daten zu füllen oder die Richtigkeit ihrer Inhalte gelegentlich zu verifizieren. Die Daten-Transfereinrichtung 23 hat die folgenden Funktionen: Wahl eines Aktualisierungsintervalls; Legen einer Adresse auf den Leseport; Lesen von Daten aus einer Quelle; und Schreiben von Daten in eine Quelle. Zum Starten eines Transfers ist ein in der Zeichnung nicht dargestelltes Steuerregister vorgesehen. Der interne RAM 21 hat bei dem beschriebenen Ausführungsbeispiel 256 Einträge mit jeweils 8 Bit. Diese geringe Kapazität reicht aus, um eine Benutzung der erfindungsgemäßen Anordnung auch ohne externe Komponenten in zahlreichen Anwendungsfällen zu ermöglichen. Der RAM kann während des Lesen des Informationsfeldes 2, des Kopfteils 3 und des Vorspanns 4 aktiviert sein. Mit dem RAM 21 wird die Signalunterbrechung gesteuert. Der Benutzer kann verschiedene Adreßquellen für den RAM über das interne RAM-Steuerregister (nicht dargestellt) auswählen.

Wie oben gesagt, ist die Verzögerungseinrichtung 13 zwischen Eingangseinheit 10 und Schreibeinrichtung 14 zur Einfügung benutzerwählbarer Verzögerungszeiten über den Mikroprozessor 25 einstellbar. Bei einfachem Kopieren oder Beschreiben ist keine große Verzögerungszeit erforderlich. Wenn die in die Datenstruktur zu schreibenden Daten jedoch von den gelesenen Daten abhängig sind, kann zur Verarbeitung der gelesenen Daten und der davon abhängigen Erzeugung von neu zu schreibenden Daten eine vergleichsweise deutlich längere Zeit erforderlich sein. In einem solchen Fall wird eine Datenstruktur in der Verzögerungseinheit 13 über eine relativ lange Verzögerungszeit verzögert, damit sichergestellt ist, daß alle einzufügenden Daten an der Schreibeinrichtung zur Verfügung stehen, bevor die Datenstruktur aus der Verzögerungseinrichtung 13 ausgegeben wird.

Gemäß einer besonderen Weiterbildung der Erfindung sind Mittel zum Überprüfen der Datenübertragung zwischen dem Mikroprozessor 25 und Bearbeitungskomponenten der beschriebenen Anordnung vorgesehen. Diese Überprüfung findet mit Hilfe eines sogenannten Doppelt-Schreib-Modus statt, der von einem gemeinsamen Steuerregister aktiviert wird. Dabei wird ein Register zweifach beschrieben. Zunächst wird das Register mit den richtigen Daten beschrieben. Das zweite Mal werden alle Daten und die Registeradreßbits invertiert. Die beiden Dateneinheiten und die Registeradresse werden verglichen. Nur wenn alle Daten richtig und gültig sind, werden sie zu dem internen Register übertragen. Auf diese Weise werden verschiedene Fehler beim Schreiben von Daten vermieden.

Im folgenden wird der Betriebsablauf der Anordnung gemäß Fig. 3 anhand eines Beispiels kurz beschrieben.

Vor der Bearbeitung der Datenstrukturen muß der Mikroprozessor zur Vorbereitung der Betriebsphase initialisiert werden. Zu diesem Zweck werden die Schnittstellen an den Eingangs- und Ausgangseinheiten 10 und 17 ausgewählt, Lese- und Schreibeinheiten zurückgesetzt und die Lese- und Schreibmasken auf die zu bearbeitende Datenstruktur eingestellt. Es sei beispielsweise der Fall angenommen, daß bei der Datenstruktur 1i gemäß Fig. 2 der Vorspann 4 durch Beschreiben eines Bytes geändert werden soll. (Zusätzlich muß die Anordnung das Kopfetikett 3 lesen und mit der neuen ATM-Adreßinformation versehen.) Das interne RAM 21 wird über die Daten-Transfereinrichtung 23 mit gültigen Werten beschrieben. Sie dienen im Betrieb als neue Kopfteilinformation. Die Verzögerungseinrichtung ist im Hinblick auf die durchzuführende Operation auf eine relativ geringe Verzögerung von 20 Takten eingestellt.

Die Zelle mit Vor-, Nach- und Parallelspann wird von der Leseeinrichtung 11 byteweise gelesen und danach als ungeteilte Datenstruktur in die Verzögerungseinrichtung 13 eingelesen. Die Leseeinrichtung 11 liest nach Maßgabe der Lesemaske 12 einerseits die Bytes 3 und 4 aus dem Kopfteil 3 der ATM-Zelle und legt diese Bytes als Zeiger über den Demultiplexer 1 an den internen Speicher 21 an. Der Speicher liefert nach Anlegen dieser Adreßinformation und einer gewissen Reaktionszeit (die kleiner als die voreingestellte Verzögerungszeit von 20 Takten ist) eine Information als Kopffeldinformation über den Demultiplexer 24 und die Scheibenmaskeneinrichtung 15 an die Schreibeinrichtung 14. Letztere adressiert wiederum die Bytes 3 und 4 zum Beschreiben des Kopfteils. Parallel dazu wird das Byte 3 des Vorspanns 4 von der Leseeinrichtung 11 gelesen. Entweder aus dem internen RAM 21 oder aus einer externen Vorspannquelle werden die an der entsprechenden Stelle einzufügenden Informationen von der Schreibmaske an die Schreibeinrichtung gegeben und der Vorspann der bearbeiteten Datenstruktur entsprechend beschrieben.

Nach Durchlaufen der Taktentkopplungsstufe 16 gelangt die geänderte Datenstruktur (1i in Fig. 2) an die Ausgangseinheit 17 und wird über den Schnittstellenmodus A byteweise geschrieben. Die Lese- und Schreibmaskeneinrichtungen 12 und 15 sind bei dieser Operation so gesetzt, daß Daten in den Nach- und Parallelspannen sowie im Informationsfeld 2 ungeändert übertragen werden.

Registriert eine der Bearbeitungseinheiten während ihrer Datenbearbeitungsphase einen Fehler, so liefert sie ein Fehlermeldesignal an den Mikroprozessor 25. Derartige Meldungen werden in geeigneten Zwischenspeichern abgelegt. Fehlermeldungen werden vom Mikroprozessor an eine externe Kontrolleinrichtung weitergegeben, die solche Fehlermeldungen auswertet und geeignete Befehle über den Mikroprozessor an die Bearbeitungseinheiten sendet. Wenn nach Fehlversuchen während eines Prüfmodus eine Zelle bzw. Datenstruktur abgelegt wird, so kann stattdessen eine Leerzelle über die Ausgangseinheit 17 ausgegeben werden.

Wie oben gesagt, ist im Verbindungsweg des Datenstroms hinter der Schreibeinrichtung 14 eine Taktentkopplung eingebunden. Dadurch kann die Ausgaberate problemlos höher als die Eingaberate gemacht werden.

## Patentansprüche

1. Anordnung zum Bearbeiten einer eine ATM-Zelle (la) enthaltenden binären Datenstruktur (la ...lo) bei deren Durchlauf durch einen Knoten eines Kommunikationsnetzwerks mit einer Eingangsschnittstelle (10), einer Leseeinrichtung (11) zum Lesen mindestens eines Zellenabschnitts, einer Schreibeinrichtung (14) zum Beschreiben wenigstens eines Zellenabschnitts und einer Ausgangsschnittstelle (17),
**dadurch gekennzeichnet,**
daß der Leseeinrichtung (11) eine erste Maskeneinrichtung (12) zum selektiven Lesen aller Informationsabschnitte (2, 3, 4, 5, 6) der bearbeiteten Datenstruktur (la ... lo), einschließlich Vor- und/oder Nach- und/oder Parallelspann und Informationsfeld (2) der ATM-Zelle zugeordnet ist und daß der Schreibeinrichtung (14) eine zweite Maskeneinrichtung (15) zum selektiven Beschreiben der ATM-Zelle in ihrem Informationsfeld (2) und Kopffeld (3) und/oder in wenigstens einem der Vor-, Nach- oder Parallelspanne (4 ... 6) der binären Datenstruktur zugeordnet ist.

2. Anordnung nach Anspruch 1, dadurch gekennzeichnet, daß die zweite Maskeneinrichtung (15) und die zugehörige Schreibeinrichtung (14) mit Mitteln zur Änderung Länge eines Vorspanns (4) und/oder eines Nachspanns (5) versehen sind.

3. Anordnung nach Anspruch 1 oder 2, dadurch gekennzeichnet, daß im Leitungsweg zwischen der Eingangsschnittstelle (10) und der Schreibeinrichtung (14) eine Verzögerungseinrichtung (13) angeordnet ist, in die die Datenstruktur (1a ... lo) ungeteilt einlesbar ist.

4. Anordnung nach Anspruch 2 oder 3, dadurch gekennzeichnet, daß die Verzögerungseinrichtung (13) mit Mitteln zur Einstellung der Verzögerung versehen ist.

5. Anordnung nach einem der Ansprüche 1 bis 4, dadurch gekennzeichnet, daß ein Mikroprozessor (25) mit allen Bearbeitungseinheiten (10 ... 17, 22 ... 24) der Anordnung gekoppelt und so ausgebildet ist, daß er vor Beginn der Bearbeitung die Ein- und Ausgabeschnittstellen (10, 17) auswählt, die Lese- und Schreibeinrichtungen (11, 14) zurücksetzt, die ersten und zweiten Maskeneinrichtungen (12, 15) zur Selektion der zu lesenden und schreibenden Infoz-mationen einstellt und ggf. die Verzögerungszeit der Verzögerungseinrichtung (13) vorgibt.

6. Anordnung nach einem der Ansprüche 1 bis 5, dadurch gekennzeichnet, daß zwischen Schreibeinrichtung (14) und Ausgangsschnittstelle (17) Mittel (16) zur Taktentkopplung eingebunden sind.

7. Anordnung nach einem der Ansprüche 1 bis 6, dadurch gekennzeichnet, daß ein interner Speicher (21) dem Knoten des Kommunikationsnetzwerks zugeordnet ist, der einerseits über einen ersten Demultiplexer (22) mit der ersten Maskeneinrichtung (12) und andererseits über einen zweiten Demultiplexer (24) mit der zweiten Maskeneinrichtung (15) gekoppelt ist und daß die Anordnung so getroffen ist, daß über die erste Maskeneinrichtung (12) ein Zeiger im Speicher (21) gesetzt wird und daß der an den indizierten Positionen befindliche Eintrag über die zweite Maskeneinrichtung (15) in wenigstens einen Informations- und Adreßabschnitt (2 . . 6) in der binären Datenstruktur geschrieben wird.

8. Anordnung nach Anspruch 7, dadurch gekennzeichnet, daß eine Datenübermittlungseinrichtung (23) über die Demultiplexer (22, 24) mit dem Speicher (21) sowie mit den ersten und zweiten Maskeneinrichtungen (12, 15) gekoppelt und zum Beschreiben des internen Speichers mit gültigen Informationen vorgesehen ist.

9. Verfahren zum Bearbeiten einer eine ATM-Zelle enthaltenden binären Datenstruktur bei deren Durchlauf durch einen Knoten eines Kommunikationsnetzwerkes,
**dadurch gekennzeichnet,**
a) daß eine Datenstruktur mit mindestens einem zusätzlichen Informationsabschnitt als Vorspann und/oder Nachspann und/oder Parallelspann verwendet wird, wobei der Vorund/oder Nach- und/oder Parallelspann selektiv einstellbar (programmierbar) ist/sind;
b) daß das Informations- und/oder Kopffeld der ATM-Zelle und/oder wenigstens einer der Vor-, Nach- oder Parallelspanne über eine erste Maskeneinrichtung selektiv gelesen wird; und
c) daß in Abhängigkeit von der Leseoperation gemäß Verfahrensschritt b) wenigstens einer der aus Informationsfeld, Zellenkopf, Vorspann, Nachspann und Parallelspann bestehenden Informationsabschnitte über eine zweite Maskeneinrichtung selektiv beschrieben und/oder entfernt wird.

10. Verfahren nach Anspruch 9, dadurch gekennzeichnet, daß die Datenstruktur nach dem Lesen ungeteilt verzögert wird, bis alle für das Schreiben im Schritt c) benötigten Daten zur Verfügung stehen.

11. Verfahren nach Anspruch 10, dadurch gekennzeichnet, daß die im Schritt c) benötigten Daten in Abhängigkeit vom selektiven Lesen wenigstens eines Informationsabschnitts zur Verfügung gestellt werden.

12. Verfahren nach einem der Ansprüch 9 bis 11, dadurch gekennzeichnet, daß die im Schritt b) selektiv gelesenen Daten und Adressen zumindest teilweise als Zeiger für einen internen Speicher verwendet werden und daß durch den Zeiger indizierte Daten aus dem internen Speicher im Schritt c) selektiv geschrieben werden.

13. Verfahren nach einem der Ansprüche 9 bis 12, dadurch gekennzeichnet, daß nach dem Beschreiben der Datenstruktur und vor der Ausgabe über die Ausgangsschnittstelle eine Taktentkopplung vorgenommen wird.

14. Verfahren nach einem der Ansprüche 9 bis 13, dadurch gekennzeichnet, daß das Maß der Verzögerung in Abhängigkeit von der Art der Schreiboperation voreingestellt wird.

15. Verfahren nach einem der Ansprüche 9 bis 14, dadurch gekennzeichnet, daß Daten in den Vorspann und/oder in den Nachspann eingefügt werden und das Format der Datenstruktur geändert wird.

16. Verfahren nach einem der Ansprüche 9 bis 15, dadurch gekennzeichnet, daß das Format der Datenstruktur dadurch geändert wird, daß Daten im Vorspann und/oder Nachspann entfernt werden.

17. Verfahren nach einem der Ansprüche 9 bis 16, dadurch gekennzeichnet, daß ein Parallelspann verwendet wird und daß der Inhalt des Parallelspanns zur Änderung von Extradaten in vorgegebenen Biteinheiten selektiv geändert wird.

18. Verfahren nach einem der Ansprüche 9 bis 17, dadurch gekennzeichnet, daß in einer Initialisierungsphase vor der Bearbeitung der binären Datenstruktur die Eingangs- und Ausgangsschnittstellen ausgewählt, Lese- und Schreibeinheiten rückgesetzt, eine zum selektiven Lesen verwendete erste Maskeneinrichtung und eine zum selektiven Schreiben verwendete zweite Maskeneinrichtung auf Lesen bzw. Schreiben wenigstens eines Informationsabschnitts aus dem Informations- und/oder Kopffeld der Zelle, einem Vorspann, einem Nachspann und/oder einem Parallelspann voreingestellt werden und daß als Datenquelle für die Schreiboperation wenigstens eine interne Quelle und/oder wenigstens eine externe Quelle ausgewählt wird.
